# EUROPÄISCHE PATENTANMELDUNG

(11) **EP 4 019 960 A1**
(43) Veröffentlichungstag der Anmeldung: **29.06.2022**
(21) Anmeldenummer: 20216835.7
(22) Anmeldetag: 23.12.2020
(51) Int. Cl.: G01N 29/032, G01N 29/24

(54) **GASMESSZELLE FÜR EINEN PHOTOAKUSTISCHEN SENSOR UND VERFAHREN ZUM ERFASSEN EINER EIGENSCHAFT EINES PROBENGASES**

(71) Anmelder: Fraunhofer-Gesellschaft zur Förderung der angewandten Forschung e.V., 80686 München (DE)
(72) Erfinder: WEBER, Christian, 79110 Freiburg (DE); KAPP, Johannes, 79110 Freiburg (DE); SCHMITT, Katrin, 79110 Freiburg (DE); STRAHL, Thomas, 79110 Freiburg (DE); SENDELBACH, Mara, 79110 Freiburg (DE)
(74) Vertreter: WSL Patentanwälte Partnerschaft mbB

(57) **Zusammenfassung**

Die vorliegende Erfindung betrifft eine Gasmesszelle für einen photoakustischen Sensor zum Erfassen einer Eigenschaft eines Probengases mit einem Gehäuse, wobei das Gehäuse einen ersten Gehäuseabschnitt aufweist, und einer Schallmesseinrichtung, wobei der erste Gehäuse-abschnitt derart ausgestaltet ist, dass der erste Gehäuseabschnitt einen ersten akustischen Resonator bildet, wobei der erste akustische Resonator, wenn der erste akustische Resonator mit einem Gas gefüllt ist, eine erst akustische Eigenmode aufweist. Erfindungsgemäß weist das Gehäuse einen zweiten Gehäuseabschnitt auf, wobei zumindest der erste Gehäuseabschnitt oder der zweite Gehäuseabschnitt ein Gasvolumen für das Probengas definieren, wobei der zweite Gehäuseabschnitt derart ausgestaltet ist, dass der zweite Gehäuseabschnitt einen zweiten akustischen Resonator bildet, wobei der zweite akustische Resonator, wenn der zweite akustische Resonator mit einem Gas gefüllt ist, eine zweite akustische Eigenmode aufweist, wobei der erste Gehäuseabschnitt und der zweite Gehäuseabschnitt derart ausgestaltet sind, dass die erste und die zweite akustische Eigenmode voneinander verschieden und akustisch aneinander gekoppelt sind, und wobei die Schallmesseinrichtung derart in dem ersten oder dem zweiten Gehäuseabschnitt angeordnet ist, dass mit der Schallmesseinrichtung eine sich in einem Gas, das in dem Gasvolumen aufgenommen ist, ausbreitende Schallwelle mit der ersten Eigenmode oder mit der zweiten Eigenmode erfassbar ist.

## Beschreibung

Die vorliegende Erfindung betrifft eine Gasmesszelle für einen photoakustischen Sensor zum Erfassen einer Eigenschaft eines Probengases mit einem Gehäuse, wobei das Gehäuse einen ersten Gehäuseabschnitt aufweist, und einer Schallmesseinrichtung, wobei der erste Gehäuseabschnitt derart ausgestaltet ist, dass der erste Gehäuseabschnitt einen ersten akustischen Resonator bildet, wobei der erste akustische Resonator, wenn der erste akustische Resonator mit einem Gas gefüllt ist, eine erst akustische Eigenmode aufweist.

Darüber hinaus betrifft die vorliegende Erfindung ein Verfahren zum Erfassen einer Eigenschaft eines Probengases mit den Schritten Beleuchten des in einer Gaszelle eingeschlossenen Probengases mit einer modulierten elektromagnetischen Anregungsstrahlung, wobei eine Frequenz eines elektromagnetischen Wechselfeldes der Anregungsstrahlung derart gewählt wird, dass das Probengas die Anregungsstrahlung absorbiert, wobei eine Modulationsfrequenz der Anregungsstrahlung derart gewählt wird, dass eine von dem Probengas aufgrund der Absorption der Anregungsstrahlung erzeugte Schallwelle gleich einer ersten Eigenmode eines von einem ersten Gehäuseabschnitt eines Gehäuses der Gasmesszelle gebildeten ersten Resonators ist.

Der Schutz der Umwelt vor Schadstoffen ist ein äußerst wichtiges Thema, insbesondere im Hinblick auf die Luftverschmutzung in Großstädten und die Herausforderungen des Klimawandels. Vor diesem Hintergrund wächst die Nachfrage nach Analyseverfahren und -vorrichtungen zum Bestimmen der Konzentration von Schadstoffen in Gasen, wie Stickoxide oder Kohlenstoffdioxid. Zum Bestimmen der Konzentration eines solchen Probengases könnten neben den optischen Verfahren der Spektroskopie unter anderem photoakustische Verfahren eingesetzt werden.

Bei einem photoakustischen Verfahren wird das Probengas, insbesondere ein das Probengas enthaltenes Gasgemisch, mit einer elektromagnetischen Anregungsstrahlung bestrahlt, wobei die Anregungsstrahlung eine Frequenz ihres elektromagnetischen Wechselfeldes aufweist, die gleich einer Absorptionsfrequenz des Probengases ist. Dadurch absorbiert das Probengas die Anregungsstrahlung. Es kommt zu einer Erwärmung des Probengases und somit zu einer thermischen Ausdehnung des Probengases bzw. des das Probengas enthaltenen Gasgemisches.

Damit aus der Bestrahlung des Probengases mit der Anregungsstrahlung Rückschlüsse auf eine Eigenschaft des Probengases gezogen werden können, wird die Anregungsstrahlung derart moduliert, dass die thermische Ausdehnung des Probengases periodisch erfolgt und somit eine Schallwelle innerhalb des Gases entsteht. Durch eine Messung der Amplitude oder der Phase dieser Schallwelle mit einer geeigneten Schallmesseinrichtung kann auf eine Eigenschaft des Probengases rückgeschlossen werden.

Typischerweise befindet sich das Probengas während des Messens mit einem photoakustischen Verfahren in einer Gasmesszelle, wobei die Gasmesszelle einen Gehäuseabschnitt aufweist, der einen akustischen Resonator bildet. Dieser akustische Resonator hat konstruktionsbedingt eine akustische Eigenmode für den sich in dem Resonator ausbreitenden Schall. Dabei wird im Folgenden immer die akustische Eigenmode betrachtet, die der mit einem Gas gefüllte Resonator hat. Die Amplitude der zu messenden Schallwelle wird dann überhöht, wenn die Modulationsfrequenz der Anregungsstrahlung gleich dem Wert der der Eigenmode zugeordneten Eigenfrequenz ist. Auf diese Weise wird ein verbessertes Signal-Rausch-Verhältnis bei dem Messen der Amplitude oder der Phase der Schallwelle erzielt.

Gegenüber diesem Stand der Technik liegt der vorliegenden Erfindung die Aufgabe zugrunde, eine Gasmesszelle für einen photoakustischen Sensor, einen photoakustischen Sensor sowie ein Verfahren zum Erfassen einer Eigenschaft eines Probengases bereitzustellen, welche ein Erfassen der Schallwelle mit einem verbesserten Signal-Rausch-Verhältnis ermöglichen.

Diese Aufgabe wird erfindungsgemäß mit einer Gasmesszelle für einen photoakustischen Sensor zum Erfassen einer Eigenschaft eines Probengases gelöst, wobei der photoakustische Sensor ein Gehäuse mit einem ersten Gehäuseabschnitt, und eine Schallmesseinrichtung aufweist, wobei der erste Gehäuseabschnitt derart ausgestaltet ist, dass der erste Gehäuseabschnitt einen ersten akustischen Resonator bildet, wobei der erste akustische Resonator, wenn der erste akustische Resonator mit einem Gas gefüllt ist, eine erste akustische Eigenmode aufweist, wobei das Gehäuse einen zweiten Gehäuseabschnitt aufweist, wobei zumindest der erste Gehäuseabschnitt oder der zweite Gehäuseabschnitt ein Gasvolumen für das Probengas definieren, wobei der zweite Gehäuseabschnitt derart ausgestaltet ist, dass der zweite Gehäuseabschnitt einen zweiten akustischen Resonator bildet, wobei der zweite akustische Resonator, wenn der zweite akustische Resonator mit einem Gas gefüllt ist, eine zweite akustische Eigenmode aufweist, wobei der erste Gehäuseabschnitt und der zweite Gehäuseabschnitt derart ausgestaltet sind, dass die erste und die zweite akustische Eigenmode voneinander verschieden und akustisch aneinander gekoppelt sind, und wobei die Schallmesseinrichtung derart in dem ersten oder dem zweiten Gehäuseabschnitt angeordnet ist, dass mit der Schallmesseinrichtung eine sich in einem Gas, das in dem Gasvolumen aufgenommen ist, ausbreitende Schallwelle mit der ersten Eigenmode oder mit der zweiten Eigenmode erfassbar ist.

Betreibt man eine Gasmesszelle eines photoakustischen Sensors mit einer kohärenten Strahlungsquelle, beispielsweise einem Diodenlaser, so ist es möglich, die Anregungsstrahlung auf einen kleinen Raum beschränkt durch eine solche Gasmesszelle zu führen. Die Gasmesszelle weist dann ein vergleichsweise kleines Volumen des von einem ihrer Gehäuseabschnitte gebildeten Resonators auf. Will man hingegen die Schallwelle mit Anregungsstrahlung aus einer nicht kohärenten Quelle erzeugen, so muss das Volumen des Resonators erheblich vergrößert werden. Bei gleicher in Schall umgesetzter Energie bewirkt das größere Volumen eine geringere Druck- oder Flussänderung des Gases aufgrund der Schallwelle; das von der Schallmesseinrichtung erfasste Signal wird geringer.

Der vorliegenden Erfindung liegt nun die Idee zugrunde, das Gehäuse der Gasmesszelle derart auszugestalten, dass sie neben dem den ersten akustischen Resonator bildenden ersten Gehäuseabschnitt einen zweiten Gehäuseabschnitt aufweist, der einen zweiten akustischen Resonator bildet. Dieser zweite akustische Resonator weist, wenn er mit einem Gas gefüllt ist, eine von der ersten akustischen Eigenmode verschiedene zweite akustische Eigenmode auf.

Entscheidend für den zu erzielenden Effekt ist, dass die erste und die zweite Eigenmode voneinander verschieden sind.

In einer Ausführungsform weisen die erste und die zweite Eigenmode verschiedene Arten von räumlich strukturellen Moden auf und sind in diesem Sinne voneinander verschieden.

Räumlich strukturelle Arten von Moden im Sinne der vorliegenden Anmeldung sind eine longitudinale Mode, eine radiale Mode oder eine azimutale Mode. In einer Ausführungsform sind Superpositionen dieser drei strukturellen Arten von Moden möglich.

In einer Ausführungsform ist die erste Eigenmode eine radiale Eigenmode und die zweite Eigenmode ist eine longitudinale Eigenmode.

In einer Ausführungsform weisen die erste und die zweite Eigenmode voneinander verschiedene räumliche Orientierungen auf.

Die erste und die zweite Eigenmode weisen beispielsweise dann voneinander verschiedene räumliche Orientierungen auf, wenn die erste und die zweite Eigenmode zwar räumlich strukturell identisch sind, aber voneinander verschiedenen Ausbreitungsrichtungen aufweisen. Beispielsweise weisen zwei jeweils radiale erste und zweite Eigenmoden, deren Achsen zueinander einen von 0° verschiedenen Winkel einschließen, voneinander verschiedene Orientierungen auf.

Die ersten und zweiten Eigenmoden der ersten und zweiten Resonatoren sind in dem Sinne eigenständige Moden, dass sie völlig unabhängig voneinander an schwingen könnten, wenn man gezielt nur eine der Moden angeregt, während man die erfindungsgemäße Koppelung verhindert. Die Eigenständigkeit der ersten und zweiten Eigenmoden ist dadurch vorgegeben, dass die Eigenmoden zu räumlich voneinander abgrenzbaren Resonatoren der ersten und zweiten Gehäuseabschnitte gehören.

In einem Gedankenexperiment würde man den ersten Gehäuseabschnitt und den zweiten Gehäuseabschnitt voneinander trennen. Dann hätte der erste Gehäuseabschnitt die erste akustische Eigenmode und das zweite Gehäuseabschnitt die zweite akustische Eigenmode. Beide Gehäuseabschnitte bilden eigenständig resonante Strukturen.

Dabei weisen die erste und die zweite Eigenmode in einer Ausführungsform im Wesentlichen gleiche Eigenfrequenzen oder gleiche Eigenfrequenzen auf. In einer Ausführungsform unterscheidet sich die zweite Eigenfrequenz der zweiten Eigenmode um maximal 10 % von der ersten Eigenfrequenz der ersten Eigenmode. In einer Ausführungsform weisen der erste akustische Resonator und der zweite akustische Resonator jeweils eine Eigenmode auf, wobei die Resonanzfrequenzen der Eigenmoden identisch sind.

Sind nun die erste und die zweite akustische Eigenmode aneinandergekoppelt, so wie es die Gasmesszelle gemäß der vorliegenden Erfindung erfordert, so lässt sich mit der Schallmesseinrichtung in Abhängigkeit davon, ob sie in dem ersten oder dem zweiten Gehäuseabschnitt angeordnet ist, eine Schallwelle mit der ersten Eigenmode oder mit der zweiten Eigenmode mit einer überhöhten Amplitude und damit einem verbesserten Signal-Rausch-Verhältnis realisieren. Insgesamt erhöht die beschriebene Struktur die Güte des akustischen Systems aus dem ersten und dem zweiten akustischen Resonator.

Die erfindungsgemäße Konstruktion der Gasmesszelle ermöglicht es, Anregungsstrahlung, die nicht kohärent ist und damit mehr Raum in dem Gehäuse der Gasmesszelle erfordert, zur Messung einzusetzen und dennoch ein hohes Signal-Rausch-Verhältnis zu erzielen. Der Vorteil des verbesserten Signal-Rausch-Verhältnisses lässt sich selbstredend unabhängig von der Ausgestaltung der Quelle realisieren. Bei gleicher Anregungsdichte kann ein verbessertes Signal-Rausch-Verhältnis realisiert werden.

Für die Funktion der erfindungsgemäßen Gasmesszelle ist es notwendig, dass der erste und der zweite Gehäuseabschnitt mit einem Gas befüllbar bzw. in dem Betrieb der Messzelle mit einem solchen Gas befüllt sind. Dabei muss das Probengas selbst nur in einem der beiden Gehäuseabschnitte aufnehmbar bzw. aufgenommen sein.

In den meisten Anwendungen der erfindungsgemäßen Gasmesszelle wird eine Eigenschaft des Probengases erfasst, wobei dieses in einem Matrixgas enthalten ist. Man kann auch von einem Spurengas in einem Gasgemisch sprechen, wobei das Spurengas das Probengas im Sinne der vorliegenden Anmeldung bildet.

Es versteht sich, dass die Eigenmode des das Probengas enthaltenden Gehäuseabschnitts bestimmt oder berechnet wird unter der Annahme, dass der entsprechende Gehäuseabschnitt mit einem Gas, in einer Ausführungsform mit dem Matrixgas, gefüllt ist.

Wenn in der vorliegenden Anmeldung Eigenmoden mit einer Ordnungszahl beschrieben werden, beispielsweise erste Eigenmode, zweite Eigenmode oder dritte Eigenmode, so bezeichnet dies nicht die Ordnung der Mode, sondern ihre Zuordnung zu dem jeweiligen Gehäuseabschnitt, nämlich dem ersten Gehäuseabschnitt, dem zweiten Gehäuseabschnitt und/oder dem dritten Gehäuseabschnitt. In einer Ausführungsform der Erfindung sind die Ordnungen der ersten Eigenmode, der zweiten Eigenmode oder dritten Eigenmode identisch oder voneinander verschieden. Insbesondere ist in einer Ausführungsform eine erste Eigenmode an eine zweite Eigenmode gekoppelt, wobei die Ordnungen der beiden Eigenmoden voneinander verschieden sind.

Der erste und der zweite Gehäuseabschnitt bilden erfindungsgemäß ein akustisch zusammenhängendes Gasvolumen, sodass sie akustisch aneinandergekoppelt sind.

Dabei ist es jedoch möglich, dass in einer Ausführungsform der Erfindung das Gasvolumen des ersten Gehäuseabschnitts und das Gasvolumen des zweiten Gehäuseabschnitts baulich derart voneinander getrennt sind, dass kein Fluidstrom eines Gases zwischen den beiden Gehäuseabschnitten möglich ist. Die beiden Gehäuseabschnitte sind in einer solchen Ausführungsform strömungsmechanisch voneinander getrennt. Eine Möglichkeit für eine derartige Realisierung ist die Anordnung einer dünnen Membran zwischen den Innenräumen der beiden Gehäuseabschnitte.

Grundsätzlich ist es möglich, die Gasmesszelle derart auszugestalten, dass die Anregungsstrahlung durch den ersten Gehäuseabschnitt und den zweiten Gehäuseabschnitt führbar ist. In einer Ausführungsform jedoch ist die Gasmesszelle derart ausgestaltet, dass die Anregungsstrahlung durch den ersten Gehäuseabschnitt führbar ist und nicht durch den zweiten Gehäuseabschnitt.

In einer Ausführungsform ist die Schallmesseinrichtung an einer Messposition in dem von dem zweiten Gehäuseabschnitt gebildeten zweiten Resonator angeordnet, wobei der zweite Gehäuseabschnitt derart ausgestaltet ist, dass der zweite Resonator an der Messposition zu einer höheren Schallenergiedichte führt als an einer beliebigen Messposition innerhalb des ersten Resonators des ersten Gehäuseabschnitts. Eine Erhöhung der Schallenergiedichte ist in einer Ausführungsform dadurch realisiert, dass der Querschnitt des Resonators, welcher der zweiten Eigenmode an der Messposition zur Verfügung steht, kleiner ist als Querschnitt, welcher der ersten Eigenmode an einer beliebigen möglichen Messposition in dem ersten Resonator zur Verfügung steht.

Eine derartige Ausführungsform ist insbesondere dann zweckmäßig, wenn der Anregungsstrahl ausschließlich durch den ersten Gehäuseabschnitt führbar ist.

In einer Ausführungsform der Erfindung ist die Schallmesseinrichtung derart in dem zweiten Gehäuseabschnitt angeordnet, dass mit der Schallmesseinrichtung eine Schallwelle mit der zweiten Eigenmode erfassbar ist.

In einer weiteren Ausführungsform der Erfindung ist die Gasmesszelle eine offene Gasmesszelle, welche einen ungehinderten Austausch von Gas mit einer Umgebung der Gasmesszelle ermöglicht. In einer Ausführungsform, bei welcher die Gasmesszelle eine offene Gasmesszelle ist, gelangt die Anregungsstrahlung durch eine freie Öffnung der Gasmesszelle ungehindert und ungesteuert in das Gehäuse und wieder aus diesem heraus.

In einer Ausführungsform der Erfindung ist die Gasmesszelle eine abgeschlossene Gasmesszelle, wobei ein Gas, welches das Probengas umfasst, durch einen definierten Gaseinlass in den Innenraum der Gasmesszelle einströmt und durch einen definierten Gasauslass aus diesem ausströmt. Insbesondere sind der Gaseinlass und/oder der Gasauslass mithilfe eines Ventils verschließbar.

Die Gasmesszelle weist in einer Ausführungsform zumindest ein Eintrittsfenster oder ein Austrittsfenster für die elektromagnetische Anregungsstrahlung auf. Dabei ist das Eintrittsfenster derart angeordnet und ausgestaltet, dass die Anregungsstrahlung durch das Eintrittsfenster in das Gasvolumen hineingelangen kann. Dabei ist das Austrittsfenster derart ausgestaltet und angeordnet, dass die Anregungsstrahlung durch das Austrittsfenster aus dem Gehäuse herausgelangen kann. Beispielsweise umfasst das Eintrittsfenster oder das Austrittsfenster ein für die Anregungsstrahlung transparentes Glas oder ein für die Anregungsstrahlung transparentes Kunststoffmaterial.

In einer weiteren Ausführungsform der Erfindung weist die Gasmesszelle ein Eintrittsfenster für die Anregungsstrahlung auf, durch welches die Anregungsstrahlung zumindest in den ersten Gehäuseabschnitt oder den zweiten Gehäuseabschnitt gelangen kann und das Austrittsfenster ist mit dem Eintrittsfenster identisch. Zusätzlich ist in der Gasmesszelle ein Reflektor angeordnet, welcher die Anregungsstrahlung wieder aus dem Fenster hinausreflektiert.

Wenn die Gasmesszelle in einer Ausführungsform nur ein Eintrittsfenster für die Anregungsstrahlung aufweist, so ist zusätzlich ein Absorber für die Anregungsstrahlung in der Gasmesszelle vorgesehen. Dieser absorbiert die Anregungsstrahlung nach dem Durchgang durch das Gas in dem zumindest einen Gehäuseabschnitt, vorzugsweise in dem ersten Gehäuseabschnitt oder in dem zweiten Gehäuseabschnitt.

Ebenfalls ist eine Ausführungsform denkbar, bei welcher die Quelle für die Anregungsstrahlung in der Gasmesszelle angeordnet ist. Auf diese Weise kann das Eintrittsfenster eingespart werden. Es versteht sich, dass auch in einer solchen Ausführungsform wieder verschiedene Varianten denkbar sind, was mit der Anregungsstrahlung nach dem Durchtritt durch den ersten und/oder zweiten Gehäuseabschnitt passiert. Es kann beispielsweise ein Austrittsfenster oder aber ein Absorber in der Zelle vorgesehen sein.

Es versteht sich, dass die in Rede stehenden Absorber derart ausgestaltet und angeordnet sind, dass sie keine thermische Ausdehnung des Gases oder im Wesentlichen keine thermische Ausdehnung des Gases bewirken, so dass durch die Absorption im Absorber keine Schallwelle im Gas des Resonators angeregt wird. Ein Absorber im Sinne der vorliegenden Anmeldung ist eine technische Einrichtung oder ein Festkörper zum Absorbieren der Anregungsstrahlung.

In einer Ausführungsform der Erfindung ist die erste Eigenmode eine radiale oder azimutale Eigenmode und die zweite Eigenmode ist eine longitudinale Eigenmode. In einer solchen Ausführungsform ist vorzugsweise die Gasmesszelle derart angeordnet, dass die Anregungsstrahlung durch den ersten Gehäuseabschnitt geleitet wird. Eine azimutale Eigenmode wird in einer Ausführungsform dadurch angeregt, dass der erste Gehäuseabschnitt einen im Wesentlichen zylindrischen Innenraum aufweist, wobei der Durchgang der Anregungsstrahlung in einer Richtung parallel zu einer Längsachse, diese wird auch Symmetrieachse oder Mittenachse bezeichnet, des Zylinders, jedoch von dieser radial beabstandet, erfolgt. Eine radiale Eigenmode wird in einer Ausführungsform dadurch angeregt, dass der erste Gehäuseabschnitt einen im Wesentlichen zylindrischen Innenraum aufweist, wobei der Durchgang der Anregungsstrahlung auf der Längsachse des Zylinders erfolgt.

In einer Ausführungsform der Erfindung weist der erste Gehäuseabschnitt einen im Wesentlichen zylindrischen oder kugelförmigen Innenraum mit einem ersten Radius auf, und der zweite Gehäuseabschnitt weist einen im Wesentlichen zylindrischen Innenraum mit einem zweiten Radius auf, wobei der erste Radius größer ist als der zweite Radius.

Dabei weist in einer solchen Ausführungsform vorzugsweise der erste Gehäuseabschnitt eine erste Längsachse auf und der zweite Gehäuseabschnitt weist eine zweite Längsachse auf, wobei entweder die zweite Längsachse die erste Längsachse schneidet und die zweite Längsachse mit der ersten Längsachse einen Winkelbereich von 70° bis 90° einschließt oder die erste und die zweite Längsachse windschief zueinander sind. Über den Winkel zwischen der ersten und der zweiten Längsachse lässt sich der Kopplungsgrad zwischen den ersten und zweiten Eigenmoden der Gasmesszelle anpassen.

Für den zweiten Gehäuseabschnitt, der in einer solchen Ausführungsform einen zylindrischen Innenraum aufweist, ist die zweite Längsachse senkrecht zum zweiten Radius. Ist der erste Gehäuseabschnitt derart ausgestaltet, dass er ebenfalls einen zylindrischen Innenraum aufweist, so ist auch dort die erste Längsachse senkrecht zum ersten Radius. In einer Ausführungsform, in welcher der erste Gehäuseabschnitt einen kugelförmigen Innenraum aufweist, ist die Längsachse in einer Ausführungsform gegeben durch die Strahlachse der Anregungsstrahlung.

In einer Ausführungsform der Erfindung weist das Gehäuse genau einen ersten und einen zweiten Gehäuseabschnitt, d.h. genau zwei Gehäuseabschnitte, auf. Allerdings ist die vorliegende Erfindung nicht auf genau zwei Gehäuseabschnitte beschränkt.

Daher weist in einer Ausführungsform der Erfindung das Gehäuse der Gasmesszelle drei oder mehr Gehäuseabschnitte auf, die jeweils einen akustischen Resonator mit einer Eigenmode bilden, wobei die drei oder mehr Gehäuseabschnitte derart ausgestaltet und angeordnet sind, dass die Eigenmoden der Gehäuseabschnitte akustisch aneinandergekoppelt sind.

In einer Ausführungsform der Erfindung weist das Gehäuse der Gasmesszelle mindestens drei oder genau drei Gehäuseabschnitte auf. Dabei weist in einer Ausführungsform der erste Gehäuseabschnitt einen im Wesentlichen kugelförmigen Innenraum mit einem ersten Radius auf und der zweite Gehäuseabschnitt weist einen im Wesentlichen zylindrischen Innenraum mit einem zweiten Radius auf und ein dritter Gehäuseabschnitt weist einen im Wesentlichen kugelförmigen Innenraum mit einem dritten Radius auf, wobei sich der zweite Gehäuseabschnitt zwischen dem ersten und dem dritten Gehäuseabschnitt erstreckt, wobei der erste Radius und der dritte Radius größer sind als der zweite Radius. Eine solche Ausführungsform kann man sich wie eine hantelförmige Struktur vorstellen. In einer Ausführungsform mit drei Gehäuseabschnitten ist das Gehäuse der Gasmesszelle derart ausgestaltet, dass die Anregungsstrahlung durch alle drei Gehäuseabschnitte führbar ist.

In einer Ausführungsform der Erfindung sind der erste Radius des ersten Gehäuseabschnitts und der dritte Radius des dritten Gehäuseabschnitts gleich.

In einer weiteren Ausführungsform der Erfindung weist der erste Gehäuseabschnitt einen im Wesentlichen kugelförmigen Innenraum mit einem ersten Radius auf, der zweite Gehäuseabschnitt weist einen im Wesentlichen zylindrischen Innenraum mit einem zweiten Radius auf und der dritte Gehäuseabschnitt weist einen im Wesentlichen zylindrischen Innenraum mit einem dritten Radius auf, wobei der erste Radius größer ist als der zweite Radius und der erste Radius größer ist als der dritte Radius. Dabei können sich die Längsachsen der drei Gehäuseabschnitte schneiden und jeweils einen Winkel von 90° bis 110° miteinander einschließen oder die Längsachsen können windschief zueinander sein. Die Anordnung der Längsachsen zueinander entscheidet über die Kopplungsstärke zwischen den von den einzelnen Gehäuseabschnitten, insbesondere zwischen den zwischen den ersten bis dritten Gehäuseabschnitten, etablierte Kopplungsstärke der akustischen Eigenmoden.

In einer Ausführungsform der Erfindung ist die Schallmesseinrichtung ein Wechseldruckwandler oder ein Wechselgasflusswandler.

Ein Beispiel für einen Wechseldruckwandler ist ein Mikrofon, wobei es auf die konkrete Bauart des Mikrofons erfindungsgemäß nicht ankommt. Ein Wechseldruckwandler erfasst, vorzugsweise zeitaufgelöst, eine Druckänderung in dem Gas, mit welchem der Wandler in Kontakt ist.

Ein Wechselgasflusswandler hingegen erfasst, vorzugsweise zeitaufgelöst, eine Änderung eines Gasflusses eines Gases, welches den Wandler umgibt. Ein Beispiel für einen Wechselgasflusswandler ist eine Messeinrichtung, die auf einer Temperaturänderung eines Drahtes beruht, wobei sich der Draht in der Schallwelle befindet.

Der Wechseldruckwandler ist in einer Ausführungsform in einem Druckmaximum, d.h. einem Schwingungsknoten der Schallwelle oder in einem Bereich um das Druckmaximum herum, angeordnet. In einer Ausführungsform der Erfindung ist der Wechseldruckwandler in dem Druckmaximum oder in einem Bereich, in dem der Druck gegenüber dem Druckmaximum maximal um 20 % reduziert ist, angeordnet.

In einer weiteren Ausführungsform ist der Wechselgasflusswandler in einem Auslenkungsmaximum, d.h. in einem Druckknoten der Schallwelle, oder in einem Bereich um das Auslenkungsmaximum herum, angeordnet. In einer Ausführungsform der Erfindung ist der Wechselgasflusswandler in dem Auslenkungsmaximum oder in einem Bereich, in dem die Auslenkung gegenüber dem Auslenkungsmaximum maximal um 20 % reduziert ist, angeordnet.

In einer Ausführungsform der Erfindung ist die Gasmesszelle Teil eines photoakustischen Sensors. Dieser photoakustische Sensor zum Erfassen der Eigenschaft des Probengases umfasst neben der Gasmesszelle in einer der Ausführungsformen, so wie sie zuvor beschrieben wurden, eine Quelle, wobei die Quelle derart ausgestaltet ist, dass die Quelle in einem Betrieb des Sensors modulierte elektromagnetische Anregungsstrahlung erzeugt und abstrahlt, wobei die Quelle und die Gasmesszelle derart ausgestaltet und angeordnet sind, dass in einem Betrieb des Sensors die von der Quelle erzeugte und abgestrahlte Anregungsstrahlung in das Gasvolumen des Gehäuses eintritt.

In einer Ausführungsform der Erfindung ist die Quelle außerhalb der Gasmesszelle angeordnet. In einer weiteren Ausführungsform der Erfindung ist die Quelle innerhalb des Gehäuses der Gasmesszelle angeordnet.

In einer Ausführungsform der Erfindung sind die Quelle und die Gasmesszelle derart ausgestaltet und angeordnet, dass in dem Betrieb des photoakustischen Sensors die Anregungsstrahlung den ersten Gehäuseabschnitt und nicht den zweiten Gehäuseabschnitt durchstrahlt.

In einer weiteren Ausführungsform sind die Quelle und die Gasmesszelle derart ausgestaltet und angeordnet, dass in dem Betrieb des photoakustischen Sensors die Anregungsstrahlung innerhalb des Gehäuses der Gasmesszelle ausschließlich von dem Probengas absorbierbar ist oder aber von dem Probengas absorbierbar ist und von einem Absorber absorbiert wird, der keine thermische Ausdehnung des Probengases bewirkt.

In einer weiteren Ausführungsform der vorliegenden Erfindung ist die Quelle eine inkohärente Quelle, insbesondere eine Leuchtdiode (LED) oder eine thermische Quelle.

Eine, vorzugsweise periodische, Modulation der elektromagnetischen Anregungsstrahlung dient der Erzeugung einer Schallwelle durch die Absorption der Anregungsstrahlung in dem Probengas. Dabei kommt es darauf an, dass die Absorption und damit die thermische Ausdehnung des Gases an- und ausgeschaltet wird. Daher kann die Modulation der Anregungsstrahlung in einer Ausführungsform eine Amplitudenmodulation sein. In einer anderen Ausführungsform ist die Modulation der Anregungsstrahlung eine Frequenzmodulation der Frequenz des elektromagnetischen Wechselfeldes der Anregungsstrahlung.

Ferner wird die zuvor genannte Aufgabe auch durch ein Verfahren zum Erfassen einer Eigenschaft eines Probengases gelöst, wobei das Verfahren die Schritte aufweist:
Beleuchten des in einer Gasmesszelle eingeschlossenen Probengases mit einer modulierten elektromagnetischen Anregungsstrahlung,
wobei eine Frequenz eines elektromagnetischen Wechselfeldes der Anregungsstrahlung derart gewählt wird, dass das Probengas die Anregungsstrahlung absorbiert und
wobei eine Modulationsfrequenz der Anregungsstrahlung derart gewählt wird, dass eine von dem Probengas aufgrund der Absorption der Anregungsstrahlung erzeugte Schallwelle gleich einer ersten Eigenmode eines von einem ersten Gehäuseabschnitt eines Gehäuses der Gasmesszelle gebildeten ersten Resonators ist,
Koppeln der ersten Eigenmode an eine zweite Eigenmode eines von einem zweiten Gehäuseabschnitt des Gehäuses der Gasmesszelle gebildeten zweiten Resonators und Erfassen zumindest einer Amplitude oder einer Phase einer Schallwelle mit der ersten oder zweiten Eigenmode.

Soweit zuvor Aspekte der Erfindung im Hinblick auf die erfindungsgemäße Gasmesszelle beschrieben wurden, so gelten diese auch für das entsprechende Verfahren zum Erfassen einer Eigenschaft des Probengases. Soweit das Verfahren mit einer Gasmesszelle bzw. einem photoakustischen Sensor gemäß dieser Erfindung ausgeführt wird, so weisen diese die entsprechenden Einrichtungen hierfür auf. Insbesondere sind Ausführungsformen der Gasmesszelle und des photoakustischen Sensors zum Ausführen der hierin beschriebenen Ausführungsformen des Verfahrens geeignet.

Weitere Vorteile, Merkmale und Anwendungsmöglichkeiten der vorliegenden Erfindung werden anhand der folgenden Beschreibung von Ausführungsformen und der dazugehörigen Figuren deutlich. In den Figuren sind gleiche Elemente mit gleichen Bezugszeichen bezeichnet.
- Figur 1: ist eine teilweise weggebrochene isometrische Ansicht einer Gasmesszelle gemäß einer ersten Ausführungsform.
- Figur 2: ist eine teilweise weggebrochene isometrische Anordnung einer weiteren Ausführungsform der Gasmesszelle.
- Figur 3: ist eine seitliche Schnittansicht durch eine dritte Ausführungsform der Gasmesszelle.
- Figur 4: ist eine teilweise weggebrochene isometrische Ansicht einer vierten Ausführungsform der Gasmesszelle.

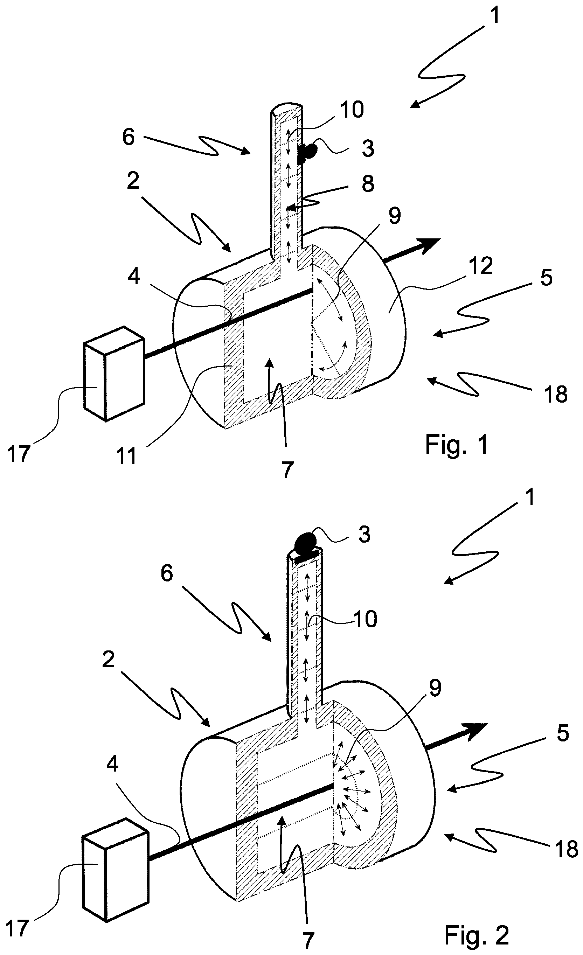

Die Figuren 1 bis 4 zeigen vier Ausführungsformen von photoakustischen Sensoren 18 mit einer Gasmesszelle 1. Jede der Gasmesszellen 1 umfasst ein Gehäuse 2 mit den entsprechenden nachfolgend diskutierten Gehäuseabschnitten sowie eine Schallmesseinrichtung 3, welche je nach Ausführungsform unterschiedliche Ausgestaltungen aufweist.

Nicht gezeigt ist für alle vier Ausführungsformen eine Quelle 17 für die Anregungsstrahlung 4. Die Quelle 17 für die Anregungsstrahlung 4 bildet zusammen mit der Gasmesszelle einen photoakustischen Sensor 18 zum Erfassen der Eigenschaft eines Probengases im Sinne der vorliegenden Anmeldung.

In den Ausführungsformen der Figuren 1 und 2 erzeugt die Quelle 17 elektromagnetische Strahlung bei einer Wellenlänge von 4.230 nm, da in dem Beispiel dieser Ausführungsformen das zu erfassende Probengas Kohlendioxid (CO₂) ist. Kohlendioxid absorbiert bei der genannten Wellenlänge.

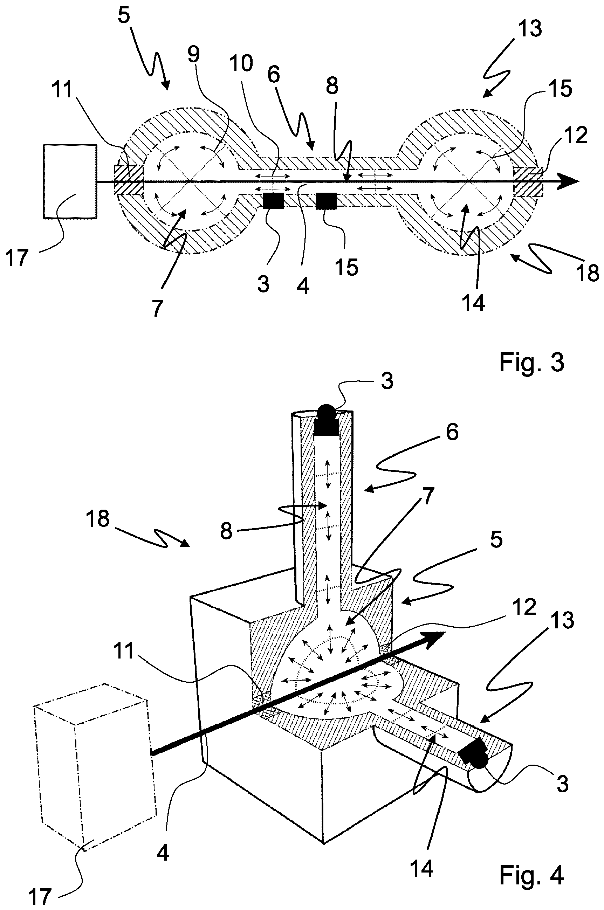

In der Ausführungsform der Figur 3 erzeugt die Quelle 17 elektromagnetische Strahlung bei einer Wellenlänge von 420 nm, da in dem Beispiel dieser Ausführungsformen das zu erfassende Probengas Stickstoffdioxid (NO₂) ist. Stickstoffdioxid absorbiert bei der genannten Wellenlänge.

In der Ausführungsform der Figur 4 erzeugt die Quelle 17 elektromagnetische Strahlung bei einer Wellenlänge von 270 nm, da in dem Beispiel dieser Ausführungsformen das zu erfassende Probengas Ozon (O₃) ist. Ozon absorbiert bei der genannten Wellenlänge.

In der Ausführungsform der Figur 3 ist die Quelle 17 ein Diodenlaser. Der Strom durch den Diodenlaser 17 ist mit der Modulationsfrequenz für die Modulation der Anregungsstrahlung moduliert, sodass die Anregungsstrahlung 4 bei der Modulationsfrequenz des Stroms eine sinusförmige Amplitudenmodulation mit einer Frequenz von 19,5 kHz aufweist.

In den anderen Ausführungsformen der Figuren 1, 2 und 4 ist die Quelle 17 eine breitbandige Leuchtdiode zum Erzeugen nicht kohärenter Anregungsstrahlung. Es versteht sich, dass in diesen Ausführungsformen die zuvor genannten Emissionswellenlängen vorzugsweise die Wellenlängen mit der maximalen Leistung der jeweiligen Emission bilden. Der Strom durch die Leuchtdiode ist mit der Modulationsfrequenz für die Modulation der Anregungsstrahlung moduliert, sodass die Anregungsstrahlung 4 bei der Modulationsfrequenz des Stroms eine sinusförmige Amplitudenmodulation mit einer Frequenz von 19,5 kHz aufweist.

Gemeinsam ist allen vier Ausführungsformen, dass das jeweilige Gehäuse 2 mindestens zwei Gehäuseabschnitte 5, 6, 13 aufweist, die jeweils für sich betrachtet einen akustischen Resonator für eine sich in dem Innenraum 7, 8, 14 des jeweiligen Gehäuseabschnitts ausbreitende Schallwelle mit einer dazugehörigen resonanten Eigenmode 9, 10 aufweist. Die mindestens zwei Eigenmoden 9, 10 sind akustisch derart aneinandergekoppelt, dass Energie von der einen Eigenmode 9 auf die andere Eigenmode 10 übertragen wird. Die Innenräume 7, 8, 14 bilden in jeder der Ausführungsformen das Gasvolumen zum Aufnehmen des Probengases.

Alle vier Gasmesszellen 1 der Figuren 1 bis 4 sind derart ausgestaltet, dass die Anregungsstrahlung zumindest durch den Innenraum 7 des ersten Gehäuseabschnittes 2 hindurchtritt. Dabei wird die Anregungsstrahlung 4 durch ein Einkoppelfenster 11 in den Innenraum 7 und damit den ersten Resonator des ersten Gehäuseabschnitts 2 eingekoppelt und durch ein Auskoppelfenster 12 aus dem Innenraum 7 ausgekoppelt. Die Einkoppel- und Auskoppelfenster 11, 12 sind für die Anregungsstrahlung 4 transparent, sodass es ausschließlich zu einer Absorption der Anregungsstrahlung 4 in dem Probengas kommt.

Alle vier Gasmesszellen 1 der Figuren 1 bis 4 bilden die Innenräume 7, 8, 14 der Gehäuseabschnitte 2, 6, 13 ein strömungsmechanisch zusammenhängendes Volumen. D.h. das zu analysierende Gas kann sich frei in den Innenräumen 7, 8, 13 der Gehäuseabschnitte 2, 6, 14 bewegen und austauschen. Für alle vier Ausführungsformen wird davon ausgegangen, dass das Probengas, hier CO₂, in ein Matrixgas bzw. Matrixgasgemisch, beispielsweise Luft, eingebettet ist. D.h. vor der Messung wird das Gasgemisch aus Matrixgas und Probengas in das Gasvolumen des Gehäuses 2 eingeleitet.

In der Ausführungsform der Figur 1 weisen der erste Gehäuseabschnitt 5 und der zweite Gehäuseabschnitt 6 jeweils hohlzylindrische Innenräume 7, 8 auf. Aufgrund der eingeschränkten Fokussierbarkeit der inkohärenten Anregungsstrahlung 4 über längere Strecken hinweg hat der Innenraum 7 des ersten Gehäuseabschnitts 5 einen vergleichsweise großen Radius. Durch die Größe des damit verbundenen Volumens des Innenraums 7 ist die durch die thermische Erwärmung des Gases in dem Innenraum 7 verbundene resonante Schallwelle nur mit einer vergleichsweise geringen Amplitude versehen.

Der Innenraum 8 des zweiten Gehäuseabschnitts 6 hingegen hat einen deutlich kleineren Radius als der Radius des Hohlzylinders des ersten Gehäuseabschnitts 5. Die beiden Längsachsen der beiden zylindrischen Innenräume 7, 8 stehen senkrecht aufeinander und schneiden sich in dieser Ausführungsform.

Die Anregungsstrahlung 4 ist in dieser Variante parallel zu der Längsachse des zylindrischen Innenraums 7 des ersten Gehäuseabschnitts 5 durch diesen hindurchgeführt. Allerdings ist die Anregungsstrahlung 4 von der Längsachse beabstandet. Auf diese Weise wird in dem ersten Gehäuseabschnitt 5 eine azimutale Eigenmode 9 angeregt. Diese azimutale Eigenmode 9 ist an die longitudinale Eigenmode 10 des zweiten Gehäuseabschnitts 6 akustisch angekoppelt. D.h. Energie der Eigenmode 9 des ersten Gehäuseabschnitts 2 wird in Energie der zweiten Eigenmode 10 des zweiten Gehäuseabschnitts 6 übertragen.

Der Innenraum 8 des zweiten Gehäuseabschnitts 6 an der Messposition der Schallmesseinrichtung 3 weist einen geringeren Querschnitt auf als der Innenraum 7 an irgendeiner potentiellen Messposition in dem Innenraum 7 des ersten Gehäuseabschnitts 5. Daher wird bei gleicher Energie die Amplitude der Schallwelle mit der zweiten Eigenmode 10 überhöht, wenn man sie mit der Amplitude der ersten Eigenmode 9 vergleicht. Diese gewissermaßen verstärkte Schallwelle 10 wird mit der Schallmesseinrichtung 3 in Form eines Mikrofons erfasst.

Da die Amplitude der Schallwelle von der Konzentration des die Anregungsstrahlung 4 absorbierenden Probengases abhängt, ist die Amplitude der von dem Mikrofon 3 erfassten Schallwelle ein Maß für die Konzentration des Probengases in dem von der Gasmesszelle 2 definierten Innenraum 7, 8.

Die Gasmesszelle aus Figur 2 ist konstruktiv weitgehend mit der Gasmesszelle 1 aus Figur 1 identisch. Die Anregungsstrahlung 4 verläuft in dieser Ausführungsform so, dass sie mit der Längsachse des zylindrischen Innenraums 7 des ersten Gehäuseabschnitts 5 zusammenfällt. Daher wird in dem von dem ersten Gehäuseabschnitt 5 gebildeten akustischen Resonator statt einer azimutalen ersten Eigenmode 9 eine radiale erste Eigenmode 9 angeregt. Auch diese radiale Eigenmode 9 ist wieder an die longitudinale Eigenmode 10 des zweiten Gehäuseabschnitts 6 gekoppelt. In der Ausführungsform aus Figur 2 ist die Schallmesseinrichtung 3 ebenfalls ein Mikrofon.

In den Ausführungsformen der Figuren 3 und 4 sind im Gegensatz zu den Ausführungsformen der Figuren 1 und 2 jeweils drei Gehäuseabschnitte 5, 6, 13 des Gehäuses 2 der Gasmesszelle miteinander verbunden, sodass die Innenräume 7, 8, 14 dieser drei Gehäuseabschnitte in Fluidverbindung miteinander stehen. Die ersten, zweiten und dritten Eigenmoden 9, 10, 15 der von diesen Gehäuseabschnitten 5, 6, 13 gebildeten akustischen Resonatoren sind, wie zuvor beschrieben, aneinandergekoppelt.

In der Ausführungsform der Figur 3 weisen alle drei Gehäuseabschnitte 5, 6, 13 zylindrische Innenräume 7, 8, 14 auf. Dabei sind jedoch die Längsachsen der ersten und dritten Innenräume 7, 14 um 90 Grad gegenüber der Längsachse des zweiten Innenraums 8 gedreht, so dass die Längsachse des zweiten Innenraums 14, die Längsachsen der beiden anderen Innenräume jeweils unter einem Winkel von 90° schneidet. Die Längsachse des zylindrischen Innenraums 8 des zweiten Gehäuseabschnitts 6 fällt jeweils mit einem Radius der zylindrischen Innenräume 7, 14 der ersten und dritten Gehäuseabschnitte 5, 13 zusammen. Es ergibt sich eine im Querschnitt hantelförmige Struktur.

Die erste Eigenmode 9 und die dritte Eigenmode 15 sind azimutale Eigenmoden, welche durch einen radialen Durchgang der Anregungsstrahlung 4 durch den zylindrischen Innenraum angeregt werden. Demgegenüber bildet sich in dem Innenraum 8 des zweiten Gehäuseabschnittes 6 eine longitudinale Eigenmode 10 aus. In der Ausführungsform der Figur 3 ist die Schallmesseinrichtung 3 ein in einem Druckmaximum der longitudinalen Welle 10 angeordneter Wechselgasflusswandler. Zusätzlich zu dem Wechselgasflusswandler 3 ist in der Mitte auch noch ein Wechseldruckwandler 16 vorgesehen. Die Messsignale des Wechselgasflusswandlers 3 und des Wechseldruckwandlers 16 werden miteinander verrechnet.

Demgegenüber weist die Gasmesszelle 1 der Ausführungsform aus Figur 4 einen ersten Gehäuseabschnitt mit einem kugelförmigen Innenraum 7 sowie einen zweiten Gehäuseabschnitt 6 und einen dritten Gehäuseabschnitt 13 jeweils mit einem zylindrischen Innenraum 8, 14 auf.

In dem kugelförmigen Innenraum 7 wird eine erste radiale, dem Radius der Kugel folgende Eigenmode 9 angeregt. Diese ist an die longitudinalen Eigenmoden der von den Innenräumen 8, 14 gebildeten zweiten und dritten Resonatoren gekoppelt. Die Längsachsen der zylindrischen Innenräume 8, 14 der zweiten und dritten Gehäuseabschnitte 6, 13 fallen jeweils mit einem Radius der Kugel des ersten Gehäuseabschnitts 5 zusammen. Die beiden zweiten und dritten Gehäuseabschnitte 6, 13 sind in dem Sinne identisch, dass sie den gleichen Radius und die gleiche Länge aufweisen. Die Längsachsen der zweiten und dritten Gehäuseabschnitte 6, 13 stehen senkrecht aufeinander. In jedem der zweiten und dritten Gehäuseabschnitte 6, 13 ist jeweils ein Mikrofon 3 zur Erfassung der Schallwellen vorgesehen. Die Anordnung aus Figur 4 erlaubt eine differenzielle Messung.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet. Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichen liste

- 1: Gasmesszelle
- 2: Gehäuse
- 3: Schallmesseinrichtung
- 4: Anregungsstrahlung
- 5, 6, 13: Gehäuseabschnitt
- 7, 8, 14: Innenraum des Gehäuseabschnitts
- 9, 10, 15: Eigenmoden
- 11: Einkoppelfenster
- 12: Auskoppelfenster
- 16: Wechseldruckwandler
- 17: Quelle
- 18: Sensor

## Patentansprüche

1. Gasmesszelle (1) für einen photoakustischen Sensor (18) zum Erfassen einer Eigenschaft eine
s Probengases mit
einem Gehäuse (2), wobei das Gehäuse (2) einen ersten Gehäuseabschnitt (5) aufweist, und
einer Schallmesseinrichtung (3),
wobei der erste Gehäuseabschnitt (5) derart ausgestaltet ist, dass der erste Gehäuseabschnitt (5) einen ersten akustischen Resonator bildet, wobei der erste akustische Resonator, wenn der erste akustische Resonator mit einem Gas gefüllt ist, eine erste akustische Eigenmode aufweist, dad
urch gekennzeichnet, dass
das Gehäuse (1) einen zweiten Gehäuseabschnitt (6) aufweist, wobei zumindest der erste Gehäuseabschnitt (5) oder der zweite Gehäuseabschnitt (6) ein Gasvolumen für das Probengas definieren,
wobei der zweite Gehäuseabschnitt (6) derart ausgestaltet ist, dass der zweite Gehäuseabschnitt (6) einen zweiten akustischen Resonator bildet, wobei der zweite akustische Resonator, wenn der zweite akustische Resonator mit einem Gas gefüllt ist, eine zweite akustische Eigenmode aufweist,
wobei der erste Gehäuseabschnitt (5) und der zweite Gehäuseabschnitt (6) derart ausgestaltet sind, dass die erste und die zweite akustische Eigenmode voneinander verschieden und akustisch aneinander gekoppelt sind, und
wobei die Schallmesseinrichtung (3) derart in dem ersten oder dem zweiten Gehäuseabschnitt angeordnet ist, dass mit der Schallmesseinrichtung (3) eine sich in einem Gas, das in dem Gasvolumen aufgenommen ist, ausbreitende Schallwelle mit der ersten Eigenmode oder mit der zweiten Eigenmode erfassbar ist.

2. Gasmesszelle (1) nach dem vorhergehenden Anspruch, wobei die Schallmesseinrichtung (3) an einer Messposition in dem von dem zweiten Gehäuseabschnitt gebildeten zweiten Resonator angeordnet ist und wobei der zweite Gehäuseabschnitt derart ausgestaltet ist, dass der zweite Resonator an der Messposition zu einer höheren Schallenergiedichte führt als an einer beliebigen Messposition innerhalb des ersten Resonators des ersten Gehäuseabschnitts.

3. Gasmesszelle (1) nach einem der vorhergehenden Ansprüche, wobei die Schallmesseinrichtung (3) derart in dem zweiten Gehäuseabschnitt (6) angeordnet ist, dass mit der Schallmesseinrichtung (3) eine Schallwelle mit der zweiten Eigenmode erfassbar ist.

4. Gasmesszelle (1) nach einem der vorhergehenden Ansprüche, wobei die erste Eigenmode eine radiale oder azimutale Eigenmode ist und die zweite Eigenmode eine longitudinale Eigenmode ist.

5. Gasmesszelle (1) nach einem der vorhergehenden Ansprüche, wobei der erste Gehäuseabschnitt (5) einen im Wesentlichen zylindrischen oder kugelförmigen Innenraum mit einem ersten Radius aufweist und der zweite Gehäuseabschnitt (6) einen im Wesentlichen zylindrischen Innenraum (8) mit einem zweiten Radius aufweist, wobei der erste Radius größer ist als der zweite Radius.

6. Gasmesszelle (1) nach dem vorhergehenden Anspruch, wobei der erste Gehäuseabschnitt (5) eine erste Längsachse aufweist und der zweite Gehäuseabschnitt (6) eine zweite Längsachse aufweist, wobei entweder die zweite Längsachse die erste Längsachse schneidet und die zweite Längsachse mit der ersten Längsachse einen Winkel in einem Bereich von 70° bis 90° einschließt oder die erste und die zweite Längsachse windschief zueinander sind.

7. Gasmesszelle (1) nach einem der vorhergehenden Ansprüche, wobei das Gehäuse (2) drei oder mehr Gehäuseabschnitte (5, 6, 13) mit jeweils einer Eigenmode aufweist, wobei die drei oder mehr Gehäuseabschnitte (5, 6, 13) derart ausgestaltet und angeordnet sind, dass die Eigenmoden der Gehäuseabschnitte (5, 6, 13) akustisch aneinander gekoppelt sind.

8. Gasmesszelle (1) nach dem vorhergehenden Anspruch, wobei der erste Gehäuseabschnitt (5) einen im Wesentlichen kugelförmigen Innenraum (7) mit einem ersten Radius aufweist und der zweite Gehäuseabschnitt (6) einen im Wesentlichen zylindrischen Innenraum (8) mit einem zweiten Radius aufweist, und wobei das Gehäuse (2) einen dritten Gehäuseabschnitt (13) mit einem im Wesentlichen kugelförmigen Innenraum (14) mit einem dritten Radius aufweist, wobei sich der zweite Gehäuseabschnitt (6) zwischen dem ersten und dem dritten Gehäuseabschnitt (5, 13) erstreckt und wobei der erste Radius und der dritte Radius größer sind als der zweite Radius.

9. Gasmesszelle (1) nach Anspruch 7, wobei der erste Gehäuseabschnitt (5) einen im Wesentlichen kugelförmigen Innenraum (7) mit einem ersten Radius aufweist und der zweite Gehäuseabschnitt (6) einen im Wesentlichen zylindrischen Innenraum (8) mit einem zweiten Radius aufweist, und wobei das Gehäuse (2) einen dritten Gehäuseabschnitt (13) mit einem im Wesentlichen zylindrischen Innenraum (14) mit einem dritten Radius aufweist, wobei der erste Radius größer ist als der zweite Radius und der erste Radius größer ist als der dritte Radius.

10. Gasmesszelle (1) nach einem der vorhergehenden Ansprüche, wobei die Schallmesseinrichtung (3) ein Wechseldruckwandler oder ein Wechselgasflusswandler ist.

11. Photoakustischer Sensor (18) zum Erfassen der Eigenschaft des Probengases mit
einer Gasmesszelle (1) nach einem der vorhergehenden Ansprüche und
einer Quelle (17), wobei die Quelle (17) derart ausgestaltet ist, dass die Quelle (17) in einem Betrieb des Sensors (18) modulierte elektromagnetische Anregungsstrahlung (4) erzeugt und abstrahlt,
wobei die Quelle (17) und die Gasmesszelle (1) derart ausgestaltet und angeordnet sind, dass in einem Betrieb des Sensors (18) die von der Quelle (17) erzeugte und abgestrahlte Anregungsstrahlung (4) in das Gasvolumen des Gehäuses (2) eintritt.

12. Photoakustischer Sensor (18) nach dem vorhergehenden Anspruch, wobei die Quelle (17) und die Gasmesszelle (1) derart ausgestaltet und angeordnet sind, dass in dem Betrieb des photoakustischen Sensors (18) die Anregungsstrahlung (4) den ersten Gehäuseabschnitt (5) und nicht den zweiten Gehäuseabschnitt (6) durchstrahlt.

13. Photoakustischer Sensor (18) nach Anspruch 11 oder 12, wobei die Quelle (17) und die Gasmesszelle (1) derart ausgestaltet und angeordnet sind, dass in dem Betrieb des photoakustischen Sensors (18) die Anregungsstrahlung (4) innerhalb des Gehäuses (2) der Gasmesszelle (1) entweder ausschließlich von dem Probengas absorbierbar ist oder von dem Probengas absorbierbar ist und von einem Absorber absorbiert wird, der keine thermische Ausdehnung des Probengases bewirkt.

14. Photoakustischer Sensor (18) nach einem der Ansprüche 11 bis 13, wobei die Quelle (17) eine inkohärente Quelle, insbesondere eine Leuchtdiode oder eine thermische Quelle, ist.

15. Verfahren zum Erfassen einer Eigenschaft eines Probengases mit den Schritten
Beleuchten des in einer Gasmesszelle (1) eingeschlossenen Probengases mit einer modulierten elektromagnetischen Anregungsstrahlung,
wobei eine Frequenz eines elektromagnetischen Wechselfeldes der Anregungsstrahlung derart gewählt wird, dass das Probengas die Anregungsstrahlung absorbiert, und
wobei eine Modulationsfrequenz der Anregungsstrahlung derart gewählt wird, dass eine von dem Probengas aufgrund der Absorption der Anregungsstrahlung erzeugte Schallwelle gleich einer ersten Eigenmode eines von einem ersten Gehäuseabschnitts eines Gehäuses (2) der Gasmesszelle (1) gebildeten ersten Resonators ist,
**dadurch gekennzeichnet, dass** das Verfahren weiterhin die Schritte aufweist
Koppeln der ersten Eigenmode an eine zweite Eigenmode eines von einem zweiten Gehäuseabschnitt des Gehäuses der Gasmesszelle gebildeten zweiten Resonators und
Erfassen zumindest einer Amplitude oder einer Phase einer Schallwelle mit der ersten oder der zweiten Eigenmode.
